# EUROPEAN PATENT SPECIFICATION

(11) **EP 1 500 122 B1**
(45) Date of publication and mention of the grant of the patent: **18.04.2007**
(21) Application number: 03712490.6
(22) Date of filing: 09.04.2003
(51) Int. Cl.: H01J 17/49, C09K 11/77, G02B 5/20

(54) **PLASMA DISPLAY PANEL COMPRISING A TERBIUM(III)-ACTIVATED FLUORESCENT SUBSTANCE**
PLASMAANZEIGETAFEL ENTHALTEND EINE TERBIUM(III)-AKTIVIERTE FLUORESZIERENDE SUBSTANZ
PANNEAU D'AFFICHAGE A PLASMA COMPRENANT UNE SUBSTANCE FLUORESCENTE ACTIVEE PAR TERBIUM(III)

(30) Priority: 19.04.2002 DE 10217552
(43) Date of publication of application: 26.01.2005
(73) Proprietor: Philips Intellectual Property & Standards GmbH, 20099 Hamburg (DE); Koninklijke Philips Electronics N.V., 5621 BA Eindhoven (NL)
(72) Inventor: Juestel, Thomas, 52066 Aachen (DE); Mayr, Walter, 52066 Aachen (DE)
(74) Representative: Meyer, Michael Josef
(86) International application number: PCT/IB2003/001285
(87) International publication number: WO 2003/090246

(56) References cited:
- EP-A- 0 783 115
- EP-A- 1 156 507
- GB-A- 1 052 394
- JP-A- 10 188 820
- PATENT ABSTRACTS OF JAPAN vol. 013, no. 197 (P-868), 11 May 1989 (1989-05-11) & JP 01 018820 A (TOSHIBA CORP), 23 January 1989 (1989-01-23)
- PATENT ABSTRACTS OF JAPAN vol. 013, no. 173 (E-748), 24 April 1989 (1989-04-24) & JP 01 003946 A (TOSHIBA CORP), 9 January 1989 (1989-01-09)

## Description

The invention relates to a plasma display panel equipped with a front plate which has a glass plate on which a dielectric layer and a protective layer are deposited, with a carrier plate covered by a segmented fluorescent layer which contains red-emitting color segments of a red-emitting fluorescent substance, blue-emitting color segments of a blue-emitting fluorescent substance and green-emitting color segments of a green-emitting Tb³⁺-activated fluorescent substance, has a rib structure which divides the space between front plate and carrier plate into plasma cells which are gas-filled, with one or more electrode arrays on the front plate and the carrier plate for generating silent electrical discharges in the plasma cells.

Plasma display panels make high-resolution color pictures possible, large display panel diagonals and are of compact structure. A plasma display panel has a hermetically sealed glass cell which is gas-filled, with grid-like arranged electrodes. By applying an electric voltage, a gas discharge is caused which generates light in the ultraviolet range (145 to 185 nm). This light can be transformed to visible light by fluorescent substances and be emitted to the viewer through the front plate of the glass cell.

For plasma display panels are used fluorescent substances which are highly efficient under vacuum-UV excitation. Frequently used green-emitting fluorescent substances are, for example, Zn₂SiO₄:Mn (ZSM) or BaAl₁₂O₁₉:Mn (BAL). The two materials show a saturated green emission color with a high y value of y > 0.7. A disadvantage of the two materials is a relatively long decay time t₁/10, which is about 30 ms for Zn₂SiO₄ with 2.5% Mn. This is caused by the fact that the spin of the transition ⁴T₁ → ⁶A₁, which is relevant for the emission of the light, is forbidden. In addition, the decay time t_{1/10} and the color point of an Mn²⁺-activated fluorescent substance strongly depend on the concentration of Mn²⁺. A further disadvantage is the sensitivity of Mn²⁺ as against an oxidation to Mn³⁺ or Mn⁴⁺, which reduces the stability of the fluorescent substance.

Contrary to this, Tb³⁺-activated fluorescent substances are stable as regards temperature and picture, because Tb³⁺ is hard to be oxidized to Tb⁴⁺. A further advantage of this fluorescent substance as against Mn²⁺-activated fluorescent substances is their shorter decay time t_{1/10}, which amounts to 2 to 10 ms depending on the host lattice.

JP-A-10188820 describes an AC plasma display panel with an antiglare filter comprising a front plate, a carrier plate and a segmented fluorescent layer, which contains red, blue and green emitting substances, and also comprising segmented red, green and blue color filter layer between the segmented fluorescent layer and the carrier plate.

EP1156507 describes a plasma screen comprising a front plate, a support plate provided with a phosphor layer containing a red, a blue and a green, Tb(III)-activated phosphor; a ribbed structure dividing the chamber between the front plate and the support plate into plasma cells; and a green colored filter layer. Preferably the green colored filter layer contains copper phthalocyanine or a derivative of it.

US 6,004,481 describes a green-emitting Tb(III)-activated fluorescent substance for applications in plasma display panels, which has the composition (Y_{1-x-y-z}GdₓTb_{y}Ce_{z})BO₃, where 0.0 < x < 0.2, 0.01 < y < 0.1 and 0.0 < z < 0.1.

A large disadvantage of Tb(III)-activated fluorescent substance is its yellow-green color point, which has a low y value of y < 0.62.

It is an object of the invention to provide a plasma display panel with a Tb³⁺-activated fluorescent substance whose green sub-pixels produce light with an improved color dot.

The object is achieved by a plasma display panel equipped with a front plate which has a glass plate on which a dielectric layer and a protective layer are deposited, with a carrier plate covered by a segmented fluorescent layer which contains red-emitting color segments of a red-emitting fluorescent substance, blue-emitting color segments of a blue-emitting fluorescent substance and green-emitting color segments of a green-emitting Tb³⁺-activated fluorescent substance, has a rib structure which divides the space between front plate and carrier plate into plasma cells which are gas-filled, with one or more electrode arrays on the front plate and the carrier plate for generating silent electrical discharges in the plasma cells, and has a green color filter layer, between a green-emitting color segment of the fluorescent layer and the carrier plate characterized in that the green color filter layer contains Pr³⁺-containing materials.

Besides a strong light emission with a wavelength between 540 and 550 nm, Tb³⁺-activated fluorescent substances also have, although clearly weaker, emission bands in the yellow and red spectral area. The intensity of these emission bands can be reduced by a green color filter layer containing Pr³⁺-containing materials and thus the y values of the color points of the Tb³⁺-activated fluorescent substance can be increased.

The advantageously selected materials for a green color filter layer as claimed in claim 1 and claim 2 have a high transmission between 530 and 550 nm.

The advantageously selected Tb³⁺-activated fluorescent substances as claimed in claim 3 are highly efficient green-emitting fluorescent substances when excited with VUV light.

These and other aspects of the invention are apparent from and will be elucidated with reference to the embodiments described hereinafter.

In the drawings:

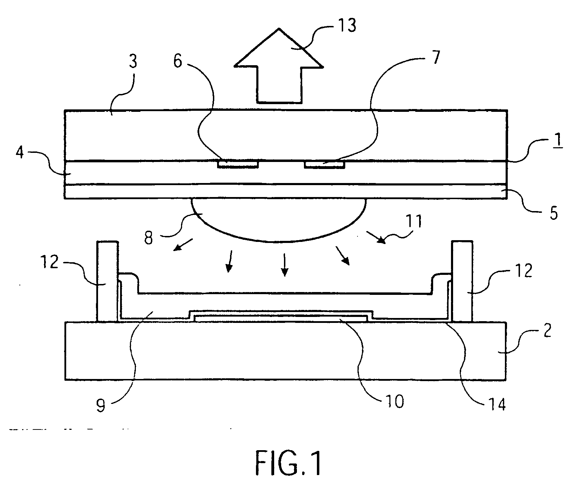

Fig. 1 shows the structure and the function principle of a single plasma cell in an AC plasma display panel with a green-emitting color segment of the fluorescent layer and a green color filter layer.

As shown in Fig. 1 a plasma cell of an AC plasma display panel with a coplanar arrangement of electrodes has a front plate 1 and a carrier plate 2. The front plate I has a transparent plate 3, for example made of glass on which are deposited a dielectric layer 4 which preferably contains low-melting glass and on top of it a protective layer 5 which preferably contains MgO. Parallel striped discharge electrodes 6, 7 which are covered by the dielectric layer 4 are deposited on the transparent plate 3. The discharge electrodes 6, 7 are made for example of metal, ITO or a combination of a metal and ITO. The discharge electrodes 6, 7 preferably each comprise a strip of ITO on which a narrower layer of Al or Ag is deposited as a bus electrode. The carrier plate 2 is preferably made of glass and on the carrier plate 2 are deposited parallel strip-like address electrodes 10 of, for example, Ag which run perpendicularly to the discharge electrodes 6, 7. These address electrodes 10 are covered by a fluorescent layer 9 which emits light 13 into one of the three basic colors red, green or blue. For this purpose the fluorescent layer 9 is subdivided into a plurality of color segments. A rib structure 12 with separating ribs of preferably dielectric material forms individually drivable plasma cells in which silent electric discharges occur.

There is a gas in the plasma cell and also between the discharge electrodes 6, 7 of which one alternately works as a cathode or an anode respectively. The gas may be, for example, a rare gas, a mixture of rare gases with Xe as an UV light-emitting component, nitrogen or a mixture of nitrogen and at least one rare gas such as, for example, He, Ne, Kr or Xe. After igniting the surface discharge as a result of which charges can flow along a discharge path between the discharge electrodes 6, 7 in the plasma area 8, a plasma is formed in the plasma area 8 by which plasma radiation 11 is generated in the UV range mostly in the VUV range depending on the composition of the gas. The radiation 11 excites the fluorescent layer 9 to radiate, which layer emits visible light 13 which comes out through the front plate 1 and thus represents a lighting dot on the display panel. The fluorescent layer 9 is subdivided into a plurality of color segments. Customarily the red, green or blue-emitting color segments of the fluorescent layer 9 are deposited in the form of perpendicular triple lines. A plasma cell with a color segment forms a so-called sub-pixel. Three adjacent plasma cells having each a red, green or blue-emitting color segment together form a pixel, or also called picture element.

Between the back of the fluorescent layer 9 of a green-emitting color segment and the carrier plate 2 there is a green color filter layer 14. In the embodiment shown in Fig. 1 the green color filter layer 14 extends to the side walls of the plasma cells between the fluorescent layer 9 of a green-emitting fluorescent substance and the rib structure 12. However, it is not necessary for the green color filter layer 14 to cover the whole back wall or all the side walls of the plasma cells. It is sufficient if the back wall and/or the side walls are covered at least partly.

Suitable materials for a green color filter layer 14 have a high transmission between 530 and 550 nm and absorb at 490, 590 and 620 nm. Eminently suitable are Pr³⁺-containing materials such as PrPO₄, [Pr(PO₃)₃]ₙ, PrF₃, PrOCl, PrOF, PrOBr, Pr₃Al₅O₁₂, PrBO₃, Pr₂SiO₅, Pr₂Si₂O₇ or PrB₃O₆, because Pr³⁺ strongly absorbs at 490 nm and 590 nm. Particularly PrPO₄ and [Pr(PO₃)₃]ₙ, are suitable for use in a green color filter layer 14.

The green color filter layer 14 can simultaneously work as a reflector for green light that was not emitted in the direction of the front plate 1.

As manufacturing methods for such a green color filter layer 14 may be used both dry coating methods, for example, electrostatic separation or electrostatic supported dry spraying and wet coating methods, for example, screen printing, dispersion methods in which a suspension is introduced with a nozzle moving along the channels, or sedimentation from the liquid phase. The same methods are suitable for manufacturing the fluorescent layer 9.

A Tb³⁺-activated fluorescent substance such as, for example, (YₓGd₁₋ₓ. _{y})BO₃:Tb_{y} (0 ≤ x ≤ 1,0 ≤ y ≤ 1), LaPO₄:Tb, (YₓGd_{1-x-y})₃Al₅O₁₂:Tb_{y} (0 ≤ x ≤ 1, 0 ≤ y ≤ 1), CeMgAl₁₁O₁₉:Tb, GdMgB₅O₁₀:Ce,Tb, (YₓGd_{1-x-y})₂SiO₅:Tb_{y} (0 ≤ x ≤ 1, 0 ≤ y ≤ 1), (InₓGd_{1-x-y})BO₃:Tb_{y} (0 ≤ x ≤ 1, 0 ≤ y ≤ 1), (Y_{1-x-y}Gdₓ)₂O₂S:Tb_{y} (0 ≤ x ≤ 1, 0 ≤ y ≤ 1), LaOBr:Tb, LaOCl:Tb or LaPO₄:Ce,Tb is used as a green-emitting fluorescent substance in the fluorescent layer 9. The concentration of Tb³⁺ in the fluorescent substances is situated preferably between 2 and 20 mol%. Preferably (Y_{0.7}Gd_{0.2})BO₃:Tb_{0.1} is used as a Tb³⁺-activated fluorescent substance.

For example (YₓGd₁₋ₓ)BO₃:Eu (0 ≤ x ≤ 1), Y(VₓP₁₋ₓ)O₄:Eu (0 ≤ x ≤ 1) or Y₂O₃:Eu may be used as a red-emitting fluorescent substance. Preferably BaMgAl₁₀O₁₇:Eu is used as a blue-emitting fluorescent substance.

It may be advantageous for a red color filter layer to be located between the color segments of the fluorescent layer 9 of a red-emitting fluorescent substance and the carrier plate 2 and/or a blue color filter layer between the color segments of the fluorescent layer 9 of a blue-emitting fluorescent substance. For example, Fe₂O₃, TaON or CdS-CdSe may be used as pigments for a red color filter layer and, for example, Co₀-Al₂O₃ as pigments for a blue color filter layer or ultramarine. The manufacturing of these color filter layers takes place in accordance with a method described for the manufacture of the green color filter layer 14.

Basically, a green color filter layer 14 may be used in all types of plasma display panels such as, for example, in AC plasma display panels with or without a matrix arrangement of the electrode arrays or DC plasma display panels.

### Example of embodiment 1

On a carrier plate 2 with a rib structure 12, a green color filter layer 14 of PrPO₄ was deposited in the plasma cells in which later on there would be a green-emitting color segment of the fluorescent layer 9. Subsequently, (Y_{0.7}Gd_{0.2})BO₃:Tb_{0.1}) was deposited as a green-emitting fluorescent substance on the green color filter layer 14 by means of screen printing. Then the red and blue-emitting color segments were established with Y₂O₃:Eu or BaMgAl₁₀O₁₇:Eu, respectively, as fluorescent substances. The carrier plate 2 was used together with a front plate 1 and a gas mixture with xenon as a component generating UV light to build a plasma display panel with an improved color dot for the green pixels.

The color point (x,y) of the green sub-pixel in such a plasma display panel was x = 0.323, y = 0.626. By comparison, the color point (x,y) of the green sub-pixels of a comparable plasma display panel without a PrPO₄ₓ green color filter layer was 14 x = 0.331, y = 0.584.

### Example of embodiment 2

A plasma display panel similar to the example of embodiment I described was made with only y₂SiO₅:5%Tb being used as a green-emitting fluorescent substance.

The color dot (x,y) of the green sub-pixels in such a plasma display panel was x = 0.315, y = 0.638. By comparison the color dot (x,y) of the green sub-pixels of a comparable plasma display panel without a PrPO₄ green color filter layer 14 was x = 0.335, y =0.615.

## Claims

1. A plasma display panel equipped with a front plate (1) which has a glass plate (3) on which a dielectric layer (4) and a protective layer (5) are deposited, with a carrier plate (2) covered by a segmented fluorescent layer (9) which contains red-emitting color segments of a red-emitting fluorescent substance, blue-emitting color segments of a blue-emitting fluorescent substance and green-emitting color segments of a green-emitting Tb³⁺-activated fluorescent substance, has a rib structure (12) which divides the space between front plate (1) and carrier plate (2) into plasma cells which are gas-filled, with one or more electrode arrays (6, 7, 10) on the front plate (1) and the carrier plate (2) for generating silent electrical discharges in the plasma cells and has a green color filter layer (14) between a green-emitting color segment of the fluorescent layer (9) and the carrier plate (2), **characterized in that** the green color filter layer (14) contains Pr3⁺-containing materials.

2. A plasma display panel as claimed in claim 1, **characterized in that** Pr³⁺-containing materials are selected from the group PrPO₄, [Pr(PO₃)₃]ₙ, PrF₃, PrOCl, PrOF, PrOBr, Pr₃Al₅O₁₂, PrBO₃, Pr₂SiO₅, Pr₂Si₂O₇ and PrB₃O₆.

3. A plasma display panel as claimed in claim 1, **characterized in that** the green Tb³⁺-activated fluorescent substance is selected from the group (YₓGd_{1-x-y})BO₃:Tb_{y} (0 ≤ x ≤ 1,0 ≤ y ≤ 1), LaPO₄:Tb, (YₓGd_{1-x-y})₃Al₅O₁₂:Tb_{y} (0 ≤ x ≤ 1,0 ≤ y ≤ 1), CeMgAl₁₁O₁₉:Tb, GdMgB₅O₁₀:Ce,Tb, (YₓGd_{1-x-y})₂SiO₅:Tb_{y} (0 ≤ x ≤ 1, 0 ≤ y ≤ 1), (InₓGd_{1-x-y})BO₃:Tb_{y} (0 ≤ x ≤ 1, 0 ≤ y ≤ 1), (Y_{1-x-y}Gdₓ)₂O₂S:Tb_{y} (0 ≤ x ≤ 1, 0 ≤ y ≤ 1), LaOBr:Tb, LaOCl:Tb and LaPO₄:Ce, Tb.

## Patentansprüche

1. Plasmabildschirm, ausgerüstet mit einer Frontplatte (1), die eine Glasplatte (3), auf der eine dielektrische Schicht (4) und eine Schutzschicht (5) aufgebracht sind, aufweist, mit einer Trägerplatte (2), die mit einer segmentierten Leuchtstoffschicht (9) bedeckt ist, die rot-emittierende Farbsegmente eines rot-emittierenden Leuchtstoffs, blauemittierende Farbsegmente eines blau-emittierenden Leuchtstoffs sowie grün-emittierende Farbsegmente eines grün-emittierenden, Tb³⁺-aktivierten Leuchtstoffs enthält, mit einer Rippenstruktur (12), die den Raum zwischen Frontplatte (1) und Trägerplatte (2) in Plasmazellen, die mit einem Gas gefüllt sind, aufteilt, mit einem oder mehreren Elektroden-Arrays (6,7,10) auf der Frontplatte (1) und der Trägerplatte (2) zur Erzeugung von stillen elektrischen Entladungen in den Plasmazellen und mit einer grünen Farbfilterschicht (14) **dadurch gekennzeichnet, dass** die grüne Farbfilterschicht sich zwischen einem grün-emittierenden Farbsegment der Leuchtstoffschicht (9) und der Trägerplatte (2) befindet und die grüne Farbfilterschicht (14) Pr³⁺-haltige Materialien enthält.

2. Plasmabildschirm nach Anspruch 1, **dadurch gekennzeichnet, dass** Pr³⁺-haltige Materialien aus der Gruppe PrPO₄, [Pr(PO₃)₃]ₙ, PrF₃, PrOCl, PrOF, PrOBr, Pr₃Al₅O₁₂, PrBO₃, Pr₂SiO₅, Pr₂Si₂O₇ und PrB₃O₆ ausgewählt sind.

3. Plasmabildschirm nach Anspruch 1, **dadurch gekennzeichnet, dass** der grüne, Tb³⁺-aktivierte Leuchtstoff aus der Gruppe (YₓGd_{1-x-y})BO₃:Tb_{y} (0 ≤ x ≤ 1, 0 ≤ y ≤ 1), LaPO₄:Tb, (YₓGd_{1-x-y})₃Al₅O₁₂:Tb_{y} (0 ≤ x ≤ 1, 0 ≤ y ≤ 1), CeMgAl₁₁O₁₉:Tb, GdMgB₅O₁₀:Ce,Tb, (YₓGd_{1-x-y})₂SiO₅:Tb_{y} (0 ≤ x ≤ 1, 0 ≤ y ≤ 1), (InₓGd_{1-x-y})BO₃:Tb_{y} (0 ≤ x ≤ 1, 0 ≤ y ≤ 1), (Y_{1-x-y}Gdₓ)₂O₂S:Tb_{y}(0 ≤ x ≤ 1, 0 ≤ y ≤ 1), LaOBr:Tb, LaOCl:Tb und LaPO₄:Ce, Tb ausgewählt ist.

## Revendications

1. Panneau d'affichage à plasma étant équipé d'une plaque avant (1) qui présente une plaque de verre (3) sur laquelle une couche diélectrique (4) et une couche protectrice (5) sont déposées, d'une plaque de support (2) étant couverte par une couche fluorescente segmentée (9) qui contient des segments chromatiques émetteurs de rouge d'une substance fluorescente émettrice de rouge, des segments chromatiques émetteurs de bleu d'une substance fluorescente émettrice de bleu et des segments chromatiques émetteurs de vert d'une substance fluorescente émettrice de vert activée par Tb³⁺, qui présente une structure de nervures (12) divisant l'espace compris entre la plaque avant (1) et la plaque de support (2) en des cellules de plasma qui sont remplies de gaz, et d'une ou de plusieurs séries d'électrodes (6, 7, 10) sur la plaque avant (1) et la plaque de support (2) pour générer des décharges électriques silencieuses dans les cellules de plasma et qui présente une couche filtrante chromatique verte (14), **caractérisé en ce que** la couche filtrante chromatique verte se situe entre un segment chromatique émetteur de vert de la couche fluorescente (9) et la plaque de support (2) et **en ce que** la couche filtrante chromatique verte (14) contient des matériaux contenant Pr³⁺.

2. Panneau d'affichage à plasma selon la revendication 1, **caractérisé en ce que** des matériaux contenant Pr³⁺ sont sélectionnés parmi le groupe contenant PrPO₄, [Pr(PO₃) 3]ₙ, PrF₃, PrOCl, PrOF, PrOBr, Pr₃Al₅O₁₂, PrBO₃, Pr₂SiO₅, Pr₂Si₂O₇ et PrB₃O₆.

3. Panneau d'affichage à plasma selon la revendication 1, **caractérisé en ce que** la substance fluorescente verte activée par Tb³⁺ est sélectionnée parmi le groupe contenant (YₓGd_{1-x-y})BO₃:Tb_{y} (0 ≤ x ≤ 1,0 ≤ y ≤ 1), LaPO₄:Tb, (YₓGd_{1-x-y})₃Al₅O₁₂:Tb_{y} (0 ≤ x ≤ 1,0 ≤ y ≤ 1), CeMgAl₁₁O₁₉Tb, GdMgB₅O₁₀:Ce, Tb, (YₓGd_{1-x-y})₂SiO₅:Tb_{y} (0 ≤ x ≤ 1,0 ≤ y ≤ 1), (InₓGd_{1-x-y})BO₃:Tb_{y} (0 ≤ x ≤ 1,0 ≤ y ≤ 1), (Y_{1-x-y}Gdₓ)₂O₂S:Tb_{y} (0 ≤ x ≤ 1,0 ≤ y ≤ 1), LaOBr:Tb, LaOCl:Tb et LaPO₄:Ce, Tb.
